# EUROPEAN PATENT APPLICATION

(11) **EP 2 464 097 A1**
(43) Date of publication of application: **13.06.2012**
(21) Application number: 10194738.0
(22) Date of filing: 13.12.2010
(51) Int. Cl.: H04N 5/232, G03B 13/02

(54) **Methods and apparatus for use in enabling an efficient review of photographic images which may contain irregularities**

(71) Applicant: Research In Motion Limited, Waterloo, ON N2L 3W8 (CA)
(72) Inventor: Dent, Terrill Mark, Waterloo Ontario N2L 3L3 (CA); Brown, Michael Stephen, Waterloo Ontario N2L 3L3 (CA); Lucas, Carl Edward, Waterloo Ontario N2L 3L3 (CA)
(74) Representative: Fennell, Gareth Charles

(57) **Abstract**

Techniques for use in an electronic device which includes a camera module for producing photographic images are described. An input request for capturing a photographic image is detected via a user interface of the electronic device. In response to detecting the input request, a photographic image is captured via the camera lens using the camera module, and the captured photographic image is produced in a visual display. In addition, a zoomed-in portion of the image is produced in the visual display, simultaneously with the display of the image. The zoomed-in portion of the image may be a picture-in-picture (PIP) window or virtual magnifying glass window overlaid with the image, for example. The image may include a blur characteristic which is only visually apparent from the zoomed-in portion of the image, in which case the image may be manually deleted by the user so that another photographic image may be captured.

## Description

### BACKGROUND

### Field of the Technology

The present disclosure generally relates to electronic devices which may be or include camera modules, and more particularly to techniques for use in enabling an efficient review of captured photographic images which may contain irregularities, such as blur.

### Description of the Related Art

Electronic devices may be or include camera modules for capturing photographic images. During low light conditions, a relatively long exposure time may be necessary during image capture. This increases the chance for irregularities, such as blur, to be produced in the captured photographic image. As the electronic device may be small in size, such as in the case of a handheld portable electronic device where the visual display is relatively small, the blur characteristic in the captured photographic image may not be readily perceived by the end user.

As a result, a less than desirable photographic image may be taken and saved. The undesirable blur characteristic in the image may be perceivable only after the image is transferred and displayed on an alternative device having a relatively larger visual display (e.g. a personal computer "PC" or the like). As apparent, this problem may cause the end user to miss opportunities to capture a desirable high-quality photographic image, and/or may result in inefficient use of device memory for saving captured photographic images.

What are needed are methods and apparatus to overcome these and related deficiencies of the prior art.

### BRIEF DESCRIPTION OF THE DRAWINGS

Embodiments of present disclosure will now be described by way of example with reference to attached figures, wherein:
FIGs. 1a and 1b are front and back views, respectively, of an electronic device which may be or include a digital "still" camera which is configured in accordance with the present disclosure;
FIG. 2 is a block diagram of components and/or modules of the digital camera of FIGs. 1a and 1b;
FIG. 3 is a flowchart for use in describing the techniques for use in enabling an efficient review of captured photographic images which may contain irregularities;
FIG. 4 is an illustration of a visual display of the digital camera which shows a photographic image to be captured by the digital camera;
FIG. 5 is another illustration of the display after image capturing, where a first captured photographic image and a first zoomed-in portion of the first captured photographic image are produced simultaneously in the visual display, and where the first zoomed-in portion has a zoom factor sufficient to make any irregularity of the captured photographic image visually apparent; and
FIG. 6 is yet another illustration of the display after image capturing, where a second captured photographic image and a second zoomed-in portion of the second captured photographic image are produced simultaneously in the visual display, where the second zoomed-in portion has the zoom factor sufficient to make any irregularity of the captured photographic image visually apparent.

### DETAILED DESCRIPTION OF THE PREFERRED EMBODIMENTS

Techniques for use in an electronic device includes a camera module for producing photographic images via a camera lens are described. An input request for capturing a photographic image is detected via a user interface of the electronic device. In response to detecting the input request, a photographic image is captured via the camera lens using the camera module, and the captured photographic image is produced in a visual display. In addition, a zoomed-in portion of the image is produced in the visual display, simultaneously with the display of the image. The zoomed-in portion of the image may be a picture-in-picture (PIP) window or virtual magnifying glass window overlaid with the image. The image may include a blur characteristic which is only visually apparent from the zoomed-in portion of the image, in which case the image may be manually deleted by the end user so that another photographic image may be captured.

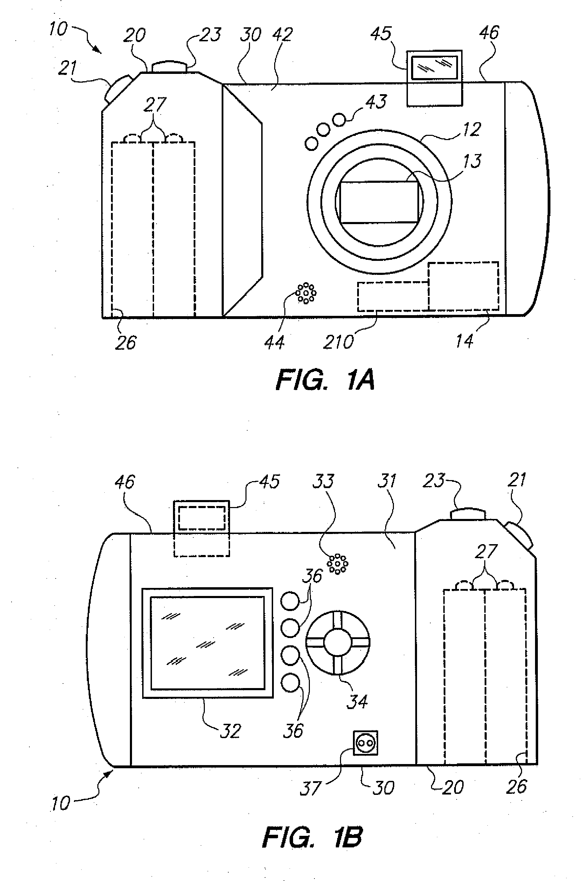

To illustrative the present techniques with reference to the drawings, FIGs. 1a and 1b show front and back views, respectively, of an exemplary embodiment of an electronic device which is or includes a digital camera 10 configured in accordance with the present disclosure. The exemplary digital camera 10 is generally configured to capture and store photographic images, and is further configured to provide for an efficient user review of captured photographic images which, from time to time, may contain irregularities (e.g. blur).

Digital camera 10 comprises a housing having a handgrip section 20 and a body section 30. Handgrip section 20 includes a power button 21, a shutter button 23 (or record button 23), and a battery compartment 26 for housing batteries or a battery pack 27. As is shown in FIG. 1a, a metering element 43 and microphone 44 are also disposed on a front surface 42 of digital camera 10. A (pop-up) flash 45 is located adjacent a top surface 46 of digital camera 10.

As is shown in FIG. 1a, digital camera 10 also comprises imaging optics or a camera lens 12, and an image sensor 13 for receiving images through camera lens 12. Processor or controller circuitry 14 (e.g. which may be or include one or more processors or controllers, including a microprocessor) is coupled to image sensor 13 (as well as other control and input/output components as necessary). A memory 210 is coupled to image sensor 13 and processor circuitry 14 for use in storing photographic images captured by digital camera 10.

As is shown in FIG. 1b, a rear surface 31 of digital camera 10 includes a visual display 32 (e.g. a color micro-display, or organic light emitting diode (OLED) display), a rear microphone 33, an input selection mechanism 34, a plurality of buttons 36, and an output port 37 for downloading images to an external display device or computer. The user interface of digital camera 10 may include visual display 32, input selection mechanism 34, and buttons 36. Visual display 32 may be or include a touch screen display or the like, and, if so, such visual display 32 may alternatively or additionally provide user input mechanisms for such selection and setting. The user interface may be used to set functions of digital camera 10, and/or used to control the selection and setting of functions which may appear in visual display 32.

In this embodiment, digital camera 10 is generally sized to fit within a human hand, and therefore may be referred to as a handheld portable electronic device. Accordingly, visual display 32 has a relatively small size and may be referred to as a handheld device display or handheld display. The size of such visual display 32 may be such that its surface area is no greater than 150 cm². Even more preferred, the size of such visual display 32 may be such that its surface area is no greater than 75 cm². In one embodiment, the visual display 32 has dimensions of about 5 x 4.5 cm, with a resulting surface area of about 22.5 cm². In another variation, the visual display 32 is part of a portable electronic device which may be referred to a "tablet" or the like, with larger dimensions such as 7 inches (17.8 cm) or 10.5 inches (26.7 cm), as examples.

In one embodiment, the electronic device which is or includes the digital camera 10 may be a wireless portable communication device. For example, the electronic device may be or be referred to as a wireless or cellular telephone, Wi-Fi enabled device (e.g. operative in accordance with IEEE 802.11 standards), or a wireless personal digital assistant (PDA).

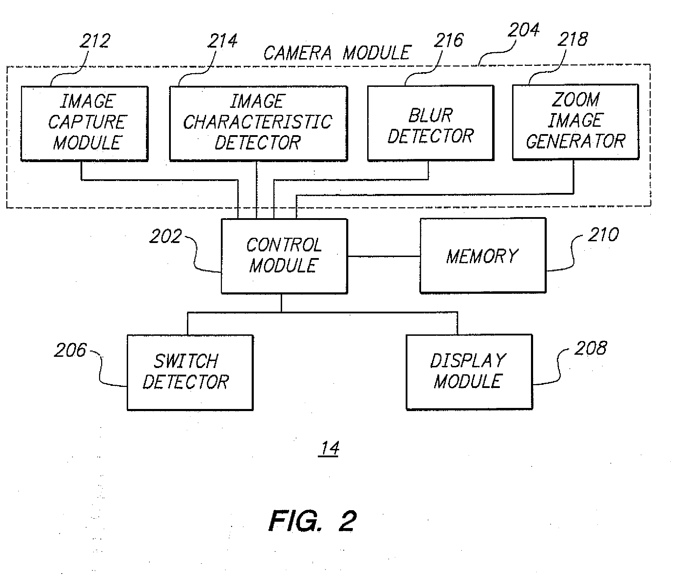

FIG. 2 is a block diagram of components and/or modules of processor circuitry 14 of digital camera 10 of FIGs. 1a and 1b. These components and/or modules may be or include hardware modules, software modules, or both, and some of the components and/or modules may be software modules (e.g. computer instructions) stored in memory accessible to the one or more processors or controllers of processing circuitry 14.

In the embodiment shown, processing circuitry 14 includes a control module 202, a camera module 204, a switch detector 206, and a display module 208. In general, camera module 204 is configured to capture photographic images entering through camera lens 12 (FIG. 1a), and may also perform other functions as well. Display module 208 is operative to control visual display 32 (FIG. 1b) for displaying a view through the camera lens 12 (FIG. 1a) for the end user to take photographs, as well as for displaying captured photographic images, user input prompts, and other information in visual display 32 (FIG. 1b). Switch detector 206 is configured to detect actuations of user inputs (e.g. input selection mechanism 34, buttons 36, and/or visual display 32 of FIG. 1b). Control module 202 is configured to control camera module 204 and display module 208, in response to the actuations detected from switch detector 206, for example. Captured photographic images from camera module 204 may be saved or stored in memory 210 for subsequent viewing in display module 208, as well as outputfrom output port 37 for downloading images to an external display device or computer.

Camera module 204 may include an image capture module 212, an image characteristic detector 214, a blur detector 216, and a zoom image generator 218. Control module 202 is configured to communicate various requests to camera module 204, and these requests are passed to one of its associated modules 212, 214, 216, and 218 for appropriate handling. Image capture module 212 is the specific module in camera module 204 that is operative to capture photographic images through camera lens 12 (FIG. 1a). Zoom image generator 218 is operative to produce a zoomed-in image of the captured photographic image in response to a request from control module 202. Image characteristic detector 214 is operative to detect and identify a predetermined image characteristic within a captured photographic image. The predetermined image characteristic may be a face or facial characteristic, or a moving object characteristic, as examples. Finally, blur detector 216 is operative to detect and identify blur within a captured photographic image. Blur may be identified by blur detector 216 when an image characteristic in the captured photographic image is detected to exceed a predetermined blur threshold.

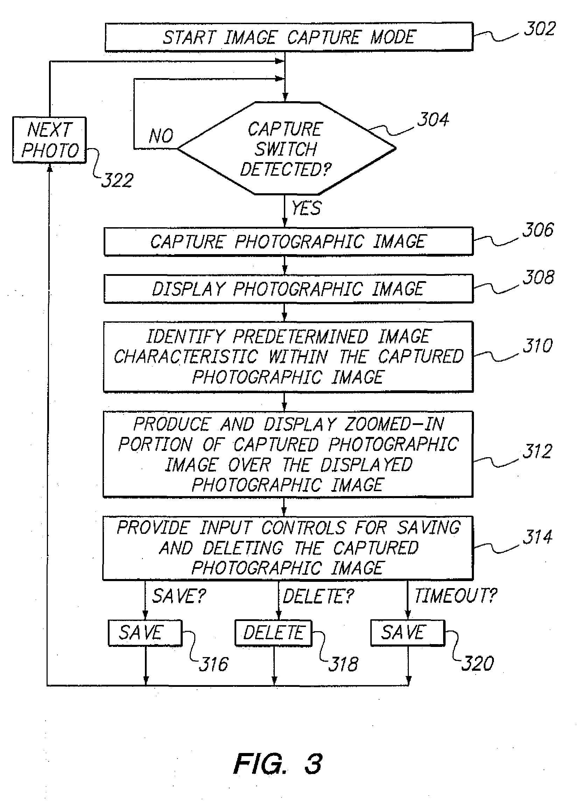

FIG. 3 is a flowchart for use in describing techniques for use in reviewing captured photographic images which may contain irregularities. Such techniques may overcome prior art deficiencies and other related deficiencies in the described environments as well as other environments. The method of FIG. 3 may be performed by digital camera 10 described in relation to FIGs. 1a and 1b, and/or with use of the processing circuitry 14 described in relation to FIG. 2. A computer program product which may embody the technique may include a computer readable medium (e.g. a memory such as FLASH memory, computer disk, hard disk, etc.) having computer instructions stored therein which are executable by the one or more processors for performing the techniques.

The technique of FIG. 3 may be described in combination with reference to FIGs. 1a, 1b, and 2. The technique begins where digital camera 10 is set to operate in an image capture mode (step 302 of FIG. 3). The digital camera 10 may be set to the image capture mode in response to detecting at the user interface an input request for setting the image capture mode. The image capture mode is a mode of operation where digital camera 10 is enabled to readily capture a photographic image, and such capturing may be triggered in response to detecting at the user interface an input request for image capturing (e.g. detection of actuation of the shutter button 23 of FIGs. 1a and 1b).

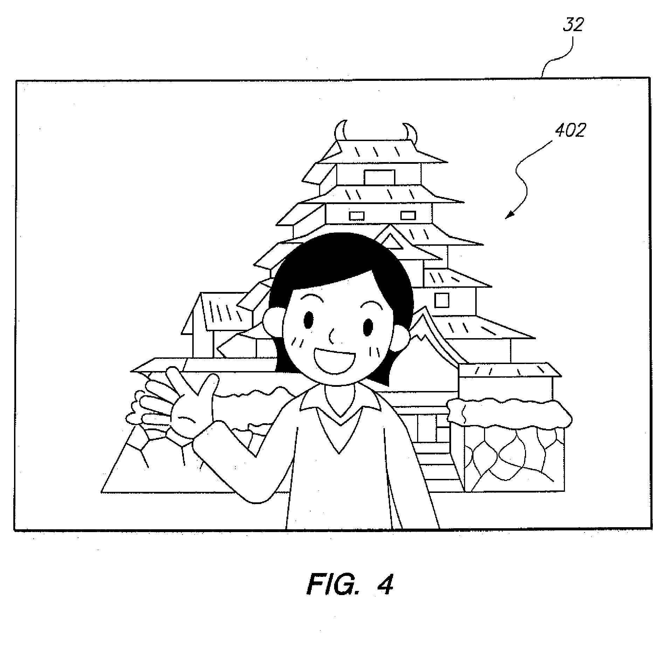

When digital camera 10 is set to the image capture mode, control module 202 communicates with display module 208 to control visual display 32 to produce a current view through camera lens 12 (i.e. for the end user to take a photograph). An example of a current view in an image capture mode is provided in FIG. 4, where a current view 402 of a person through camera lens 12 is produced in visual display 32 as shown. Note that the image capture mode may be contrasted with an image viewing mode of the digital camera 10, a mode in which digital camera 10 is enabled to provide in visual display 32 a viewing of stored photographic images in memory 210.

When digital camera 10 is set to the image capture mode, control module 202 monitors to detect at the user interface an input request for capturing a photographic image. For example, control module 202 may monitor to detect a signal from switch detector 206 which is produced in response to detection of an actuation of shutter button 23. If such actuation is detected (step 304 of FIG. 3), control module 202 instructs image capture module 212 to capture a photographic image via camera lens 12 (step 306 of FIG. 3). The captured photographic image may be referred to as a "still image" and is produced in digital form. A file containing the image may be stored temporarily in (temporary or semi-permanent) memory. Once the image is captured, control module 202 communicates with display module 208 to produce the captured photographic image in visual display 32 (step 308 of FIG. 3). The displayed captured photographic image may appear similar to or substantially the same as the view 402 of the person shown in visual display 32 of FIG. 4.

In the present embodiment, in step 308 the control module 202 causes the captured photographic image to be reduced in size, and causes this reduced-sized captured photographic image to be produced in visual display 32. The captured photographic image is reduced in size so that it is able to be displayed in visual display 32 in its entirety, as the size of the visual display 32 is smaller than the actual size of the captured photographic image.

Note that, as a result of reducing the size of the image, any irregularities (e.g. blur) in the displayed image may be more difficult to perceive in visual display 32 by the end user. Put another way, due to the relatively small size of visual display 32, any blur characteristic is not readily perceivable (or much less perceivable) by the end user from the display of the captured photographic image alone.

The size of the captured photographic image may be reduced to any suitable percentage of its normal size, such that any blur characteristic is not readily perceivable (or much less perceivable) by the end user. For example, the size of the captured photographic image may be reduced to within a range of 15-75% of the normal size of the captured photographic image, In one specific example for illustrative purposes, a 3 megapixel camera is utilized, the raw image is 2048 x 1536, and the raw image is reduced to 480 x 360. Here, the size of the captured photographic image is reduced to about 25% of its normal size. As is known, however, utilization of more megapixels will result in a much larger scale ratio.

Control module 202 then attempts to identify a predetermined image characteristic within the captured photographic image (step 310 of FIG. 3). For example, the predetermined image characteristic may be a face or facial characteristic. Note that a face is typically a prominent feature in a photograph that the end user wishes to capture properly. On the other hand, any other suitable predetermined image characteristic (e.g. other anatomy, object, a high contrast line or area, or other significant feature) may be identified. Control module 202 may communicate a request for identifying such characteristic to image characteristic detector 214 and, in response, receive a response which includes an identification of the portion of the image which includes this characteristic. The portion of the image which includes the characteristic may be identified by coordinates of the image. In one embodiment, step 310 is not included in the technique.

Face detection in a captured photographic image may be performed in step 310 of FIG. 3 using one of any well-known suitable face detection techniques. Many algorithms implement face detection as a binary pattern-classification task (i.e. classifying the members of a given set of objects into two groups on the basis of whether they have some property or not). The content of a given part of an image is transformed into features, after which a classifier (e.g. which is trained on example faces) decides whether that particular region of the image is a face or not. A window-sliding technique over the image may be employed. The classifier may be used to classify the (usually square or rectangular) portions of an image, at all locations and scales, as either faces or non-faces (background pattern).

One or more "face models" which contain the appearance and shape of a face may be utilized for such classification. There are several shapes of faces; common ones are oval, rectangle, round, square, heart, and triangle shapes. The models may be passed over the image to identify faces. On the other hand, a face characteristic may be found based on a match of skin color (e.g. using a plurality of different skin colors). Further, a combined approach may be utilized, e.g. detecting color, shape, and/or texture. For example, a skin color model may be employed first to select objects of that color, and then face models may be employed with the selected objects to eliminate false detections from the color models and/or to extract facial features such as eyes, nose, and mouth.

As an alternative to face detection, another predetermined image characteristic which may be detected in step 310 of FIG. 3 may be that of a moving object. Note that a moving object in a photograph is more likely to cause blur. Such moving object detection may be performed using one of any well-known suitable moving object detection techniques.

After detecting the predetermined image characteristic in step 310 of FIG. 3, control module 202 then causes a zoomed-in portion of the captured photographic image to be produced in the visual display, simultaneously with the display of the captured photographic image (step 312 of FIG. 3). The zoomed-in portion of the image is indeed only a portion of (i.e. a fraction of the size of) the captured photographic image. The zoomed-in portion may be said to be overlaid with (e.g. on top of, or covering) the captured photographic image. The zoomed-in portion is characterized as having a zoom factor sufficient to make any irregularity of the captured photographic image visually apparent.

In the present embodiment, the zoomed-in portion contains the predetermined image characteristic (e.g. the face or facial feature, or the moving object) identified in step 310. That is, the portion of the captured photographic image that is selected and displayed in step 312 is selected such that it includes the detected predetermined image characteristic identified in step 310. Control module 202 may communicate a request for the zoomed-in portion from zoom image generator 218 and, in response, receive a response which includes the zoomed-in portion of the captured photographic image. The request may be sent with the coordinates of the image, a zoom factor, or both, for appropriate identification.

The zoomed-in portion of the captured photographic image may be and/or be referred to as a picture-in-picture (PIP) window or a thumbnail. On the other hand, the zoomed-in portion of the captured photographic image may be and/or be referred to as a virtual magnifying glass window. The virtual magnifying glass window may have the appearance of a magnifying glass and may be movable in visual display 32 by the end user. While the captured photographic image and the virtual magnifying glass window are simultaneously produced in the visual display 32, one or more user input controls for moving the virtual magnifying glass window over a selected portion of the captured photographic image are provided. With use of the virtual magnifying glass window, the selected "windowed" portion of the image is the only portion of the image which is magnified or zoomed.

In one variation of the technique, control module 202 causes the zoomed-in portion to be produced in visual display 32 in step 312 if control module 202 identifies a predetermined blur characteristic within the captured photographic image; otherwise, control module 202 does not perform step 312. As described earlier, blur detector 216 is operative to detect and identify blur within a captured photographic image. Blur may be identified by blur detector 216 when an image characteristic in the captured photographic image is detected to exceed a predetermined blur threshold. Control module 202 may communicate a request for identifying a blur characteristic to blur detector 216 and, in response, receive a response which includes an identification of any detected blur, and/or the portion of the image which includes such blur characteristic. Detection of a blur characteristic in a captured photographic image may be performed using one of any wen-known suitable blur detection techniques. For example, detecting whether an image is in-focus or blurred may be generally performed by calculating the intensity differences along the edges of an image. If the calculated intensity is higher than a predefined threshold, the image may be identified as sharp (i.e. no blur). On the other hand, if the calculated intensity is lower than the predefined threshold, the image may be identified as blurred. As one example, Canny edge detection may be utilized to obtain the edges of an image, and these edges may be parameterized using a Hough transform. The pixel gradients along the detected parameterized lines may then be calculated, and the gradients may be utilized to determine whether or not the image is blurred. Again, the specific technique for blur detection is not important, however, and any suitable algorithm may be employed for such purpose.

In another variation on the technique, control module 202 causes the zoomed-in portion to be produced in visual display 32 in step 312 if control module 202 detects or identifies object movement within the captured photographic image; otherwise, control module 202 does not perform step 312. In yet another variation, control module 202 causes the zoomed-in portion to be produced in visual display 32 in step 312 if control module 202 detects or identifies facial object detection within the captured photographic image where the eyes of an individual are closed (e.g. using an appropriate face model or otherwise); otherwise, control module 202 does not perform step 312. In yet even another variation, control module 202 causes the zoomed-in portion to be produced in visual display 32 in step 312 if control module 202 identifies a plurality of faces within the captured photographic image and detects object movement or a facial object where the eyes of one of the individuals are closed; otherwise, control module 202 does not perform step 312.

User input controls for saving or deleting the captured photographic image are also provided in the user interface (step 314 of FIG. 3). For example, control module 202 may cause one or more user input prompts for saving or deleting the captured photographic image to be produced in the user interface. The user input prompts may be or include visual objects which are presented in visual display 32. If provided as visual objects, these objects are provided over the captured photographic image, simultaneously with the display of the image. The user input prompts may be selected manually by the end user at the user interface. For example, one user input prompt may correspond to and be labeled as a "SAVE image" function for manually saving the image, and another user input prompt may correspond to and be labeled as a "DELETE image" function for manually deleting the image.

Note that steps 308, 310, 312, and 314 are performed automatically by control module 202 immediately after the image capturing. That is, steps 306, 308, 310, 312, and 314 may be all performed by the control module 202 in response to the detection of the input request for capturing the photographic image, without detecting any other intervening input requests. Although steps 306, 308, 310, 312, and 314 are shown as being performed sequentially and in a particular sequence, the sequence of these steps is not important, and some of these steps (e.g. steps 308, 312, and 314) may even be performed at the same time or substantially the same time.

If manual selection of the user input prompt corresponding to the save image function is detected, control module 202 causes the captured photographic image to be saved in memory 210 for permanent storage with other photographic images (step 316 of FIG. 3). If manual selection of the user input prompt corresponding to the delete image function is detected, control module 202 causes the captured photographic image to be deleted from and/or not saved in memory 210 for permanent storage (step 318 of FIG. 3). If a timeout of a timer occurs (e.g. a passage of time for 30 seconds) before any user selection for saving or deleting the image, the captured photographic image is saved (by default) in memory 210 for permanent storage (step 320 of FIG. 3). This timer may be started upon presentation of the images and information in steps 306, 308, 310, 312, and 314.

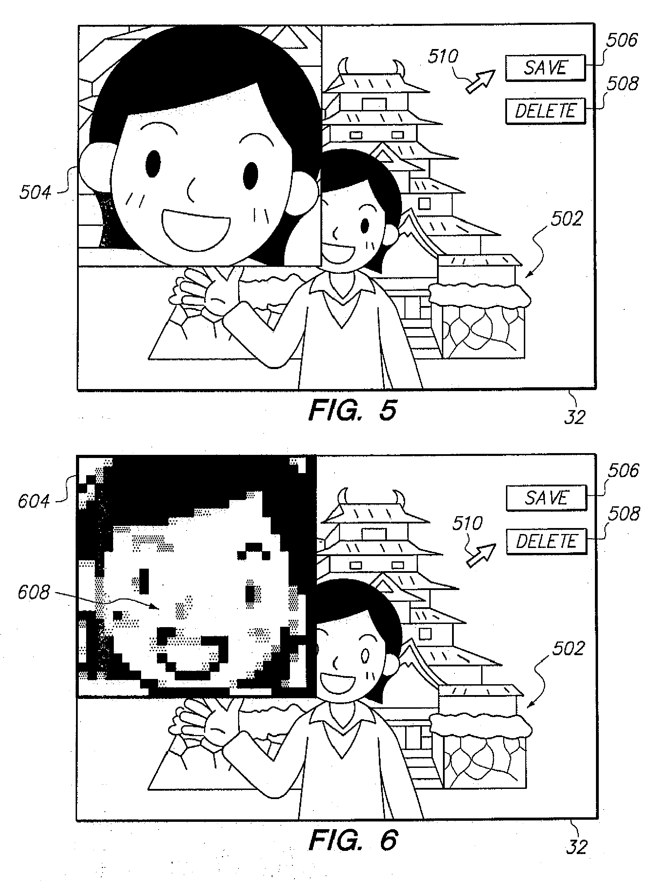

FIGs. 5 and 6 are different versions of presentations in the visual display 32 which may result with use of the technique described in relation to FIG. 3. As shown in FIG. 5, a captured photographic image 502 and a zoomed-in portion 504 of the image 502 are simultaneously produced in visual display 32 immediately after the image capture (i.e. after the detection of the input request for capturing the photographic image without any other intervening input requests). Similarly, as shown in FIG. 6, captured photographic image 502 and a zoomed-in portion 604 of the image 502 are simultaneously produced in visual display 32 immediately after the image capture. As apparent, zoomed-in portions 504 and 604 are selected such that they include the detected predetermined image characteristic (i.e. the face or facial characteristic). In the example of FIGs. 5 and 6, zoomed-in portions 504 and 604 are picture-in-picture (PIP) windows.

Due to the relatively small size of visual display 32, any blur characteristic is not readily perceivable by the end user from the display of captured photographic image 502 alone. Any undesirable blur characteristic in image 502 may be perceivable only after it is transferred from output port 37 and displayed on an alternative device having a relatively larger visual display (e.g. a personal computer "PC" or the like). In the techniques of the present disclosure, however, visual display 32 is provided with zoomed-in portions 504 and 604 in FIGs. 5 and 6 having a zoom factor sufficient to make any irregularity (e.g. blur) of captured photographic image 502 visually apparent. In these examples, zoomed-in portion 504 in FIG. 5 reveals little or no perceptible blur characteristic, whereas zoomed-in portion 604 in FIG. 6 indeed reveals a perceptible blur characteristic 608.

In FIGs. 5 and 6, a user input prompt 506 labeled as "SAVE" and corresponding to a save image function, and a user input prompt 508 labeled as "DELETE" and corresponding to a delete image function, are also presented. One of user input prompts 506 or 508 may be selected via input requests at the user interface, where a cursor 510 (or the like) is moved in visual display 32 for such selection. If selection of user input prompt 506 ("SAVE") is detected, captured photographic image 502 is saved in memory 210 for permanent storage with other saved photographic images. If selection of user input prompt 508 ("DELETE") is detected, the image is deleted and not saved in memory 210 for permanent storage. Note that when digital camera 10 is placed in the image viewing mode of operation, it is enabled to provide a viewing in visual display 32 of photographic images saved In (but not deleted from) memory 210.

As an illustrative example, the end user of the digital camera 10 would manually save captured photographic image 502 of FIG. 5, but manually delete captured photographic image 502 of FIG. 6. Thus, the end user is adequately enabled to review or inspect the captured image in an efficient fashion, and save or delete the image as desired. If the end user notices the blur or other irregularity, the end user has been effectively prompted to taken another photograph. As apparent, the end user has the "final say" (i.e. makes the final decision) regarding whether the image should be saved or deleted. The end user does not miss opportunities to capture a desirable high-quality photographic image, and/or there is more efficient use of memory 210 for saving captured photographic images.

Thus, techniques for use in an electronic device which includes a camera module for producing photographic images via a camera lens have been described. An input request for capturing a photographic image is detected via a user interface of the electronic device, In response to detecting the input request, a photographic image is captured via the camera lens using the camera module, and the captured photographic image is produced in a visual display. In addition, a zoomed-in portion of the image is produced in the visual display, simultaneously with the display of the image. The zoomed-in portion of the image may be a picture-in-picture (PIP) window or virtual magnifying glass window overlaid with the image, for example. The image may include a blur characteristic which is only visually apparent from the zoomed-in portion of the image, in which case the image may be manually deleted by the user so that another photographic image may be captured.

The above-described embodiments of the present disclosure are intended to be examples. Similar or the same problems may exist in other environments. Those of skill in the art may effect alterations, modifications and variations to the particular embodiments without departing from the scope of the application. The invention described herein in the recited claims intends to cover and embrace all suitable changes in technology.

## Claims

1. A method in an electronic device which includes a camera module (204) for producing photographic images via a camera lens (12), the method comprising the acts of:
detecting, via a user interface of the electronic device, an input request for capturing a photographic image;
in response to detecting the input request for capturing the photographic image:
causing a photographic image (502) to be captured via the camera lens (12) using the camera module (204);
causing the captured photographic image (502) to be produced in a visual display (32) of the user interface; and
causing a zoomed-in portion (504) of the captured photographic image to be produced in the visual display (32), simultaneously with the display of the captured photographic image (502).

2. The method of claim 1, wherein the act of causing the zoomed-in portion (504) of the captured photographic image to be produced in the visual display (32) comprises the further act of utilizing a zoom factor sufficient to make a blur characteristic of the captured photographic image (502) visually apparent.

3. The method of claim 1, further comprising:
while the captured photographic image (502) and the zoomed-in portion (504) of the captured photographic image are being simultaneously produced in the visual display (32):
providing, in the user interface, one or more user input controls for saving or deleting the captured photographic image (502).

4. The method of claim 1, further comprising the acts of:
detecting a predetermined image characteristic within the captured photographic image (502); and
selecting the zoomed-in portion (504) of the captured photographic image so that it includes the detected predetermined image characteristic.

5. The method of claim 1, further comprising the acts of:
detecting a facial image characteristic within the captured photographic image (502); and
selecting the zoomed-in portion (504) of the captured photographic image so that it includes the detected facial image characteristic.

6. The method of claim 1, further comprising the acts of:
detecting a moving object within the captured photographic image (502); and
selecting the zoomed-in portion (504) of the captured photographic image so that it includes the detected moving object.

7. The method of claim 1, wherein the act of causing the zoomed-in portion (504) of the captured photographic image to be produced in the visual display (32) comprises the further act of causing a picture-in-picture window or thumbnail comprising the zoomed-in portion (504) of the captured photographic image to be produced in the visual display (32).

8. The method of claim 1, wherein the act of causing the zoomed-in portion (504) of the captured photographic image to be produced in the visual display (32) comprises the further act of causing a virtual magnifying glass window which includes the zoomed-in portion (504) of the captured photographic image to be produced in the visual display (32) and overlaid with the display of the captured photographic image (502).

9. The method of claim 1, wherein the act of causing the zoomed-in portion (504) of the captured photographic image to be produced in the visual display (32) comprises the further act of causing a virtual magnifying glass window which includes the zoomed-in portion (504) of the captured photographic image to be produced in the visual display (32) and overlaid with the display of the captured photographic image (502), the method comprising the further act of:
while the captured photographic image (502) and the zoomed-in portion (504) of the captured photographic image are simultaneously produced in the visual display (32):
providing, in the user interface, one or more user input controls for moving the virtual magnifying glass window over a selected portion of the captured photographic image (502).

10. The method of claim 1, wherein the electronic device comprises a handheld wireless portable communication device operative in a wireless communication network.

11. The method of claim 1, which is embodied as computer instructions which are stored in a computer readable medium and executable by one or more processors of the electronic device.

12. An electronic device, comprising:
one or more processors;
a user interface coupled to the one or more processors;
the one or more processors being operative to:
detect, via the user interface, an input request for capturing a photographic image;
in response to detecting the input request for capturing the photographic image:
cause the photographic image to be captured using a camera module of the electronic device;
cause the captured photographic image (502) to be produced in the visual display (32); and
cause a zoomed-in portion (504) of the captured photographic image to be produced in the visual display (32), simultaneously with the display of the captured photographic image (502).

13. The electronic device of claim 12, wherein the one or more processors are further operative to, while the captured photographic image (502) and the zoomed-in portion (504) of the captured photographic image are being simultaneously produced in the visual display (32), provide in the user interface one or more user input controls for saving or deleting the captured photographic image (502).

14. The electronic device of claim 12, wherein the one or more processors are further operative to detect a predetermined image characteristic within the captured photographic image (502) and select the zoomed-in portion (504) of the captured photographic image so that it includes the detected predetermined image characteristic.

15. The electronic device of claim 12, wherein the one or more processors are further operative to:
cause the zoomed-in portion (504) of the captured photographic image to be produced by causing a picture-in-picture window or thumbnail comprising the zoomed-in portion (504), of the captured photographic image to be produced in the visual display (32); or
cause the zoomed-in portion (504) of the captured photographic image to be produced by causing a virtual magnifying glass window which includes the zoomed-in portion (504) of the captured photographic image to be produced in the visual display (32) and overlaid with the display of the captured photographic image (502).

## Amended claims

### Amended claims in accordance with Rule 137(2) EPC.

**1.** A method in an electronic device which includes a camera module (204) for producing photographic images via a camera lens (12), the method comprising:
operating in an image capture mode where a current view through the camera lens (12) is produced in a visual display (32) of a user interface of the electronic device;
detecting, via the user interface, an input request for capturing a photographic image of the current view in the image capture mode; and
in response to detecting the input request for capturing the photographic image in the image capture mode:
capturing a photographic image (502) via the camera lens (12) using the camera module (204);
displaying the captured photographic image (502) in the visual display (32);
detecting, in a blur detector of the electronic device, when a blur characteristic in the captured photographic image (502) exceeds a predetermined threshold;
when the blur characteristic exceeds the predetermined threshold, displaying a zoomed-in portion (504) of the captured photographic image in the visual display (32), simultaneously with the display of the captured photographic image (502), with use of a zoom factor to make the blur characteristic visually apparent in the zoomed-in portion (504); and
producing, in the visual display (32), an input prompt (508) for deleting the captured photographic image (502).

**2.** The method of claim 1, further comprising:
when a timeout of a timer occurs before any selection of the input prompt (508) for deleting the captured photographic image (502), saving the captured photographic image (502) in memory for permanent storage;
when a selection of the input prompt (508) for deleting the captured photographic image (502) is detected before the timeout of the timer occurs, deleting the captured photographic image (502) from the memory; and
repeating the detecting of an input request for capturing a next photographic image in the image capture mode.

**3.** The method of claim 2, further comprising:
producing, in the visual display (32), an input prompt (506) for saving the captured photographic image (502), the input prompt (506) for saving the captured photographic image (502) comprising a visual object provided over the captured photographic image (502) in the visual display (32); and
when a timeout of a timer occurs before any selection of the input prompts (506, 508) for saving or deleting the captured photographic image (502), saving the captured photographic image (502) in memory for permanent storage.

**4.** The method of any one of claims 1 to 3, further comprising the acts of:
detecting a predetermined image characteristic within the captured photographic image (502), the predetermined image characteristic comprising a high contrast line or area; and
selecting the zoomed-in portion (504) of the captured photographic image so that it includes the detected predetermined image characteristic.

**5.** The method of any one of claims 1 to 3, further comprising the acts of:
detecting a facial image characteristic within the captured photographic image (502); and
selecting the zoomed-in portion (504) of the captured photographic image so that it includes the detected facial image characteristic.

**6.** The method of any one of claims 1 to 3, further comprising the acts of:
detecting a moving object within the captured photographic image (502); and
selecting the zoomed-in portion (504) of the captured photographic image so that it includes the detected moving object.

**7.** The method of any one of claims 1 to 6, wherein the act of displaying the zoomed-in portion (504) of the captured photographic image in the visual display (32) comprises the further act of displaying a picture-in-picture window or thumbnail comprising the zoomed-in portion (504) of the captured photographic image in the visual display (32).

**8.** The method of any one of claims 1 to 6, wherein the act of displaying the zoomed-in portion (504) of the captured photographic image in the visual display (32) comprises the further act of displaying a virtual magnifying glass window which includes the zoomed-in portion (504) of the captured photographic image in the visual display (32) and overlaid with the display of the captured photographic image (502), the virtual magnifying glass window having an appearance of a magnifying glass and including a windowed portion which is the only portion of the captured photographic image (502) which is magnified or zoomed.

**9.** The method of claim 8, further comprising:
while the captured photographic image (502) and the zoomed-in portion (504) of the captured photographic image are simultaneously produced in the visual display (32):
providing, in the user interface, one or more user input controls for moving the virtual magnifying glass window over a selected portion of the captured photographic image (502).

**10.** The method of any one of claims 1 to 9, wherein the act of detecting whether the blur characteristic exceeds the predetermined threshold further comprises:
calculating an intensity along edges of the captured photographic image (502); and
if the calculated intensity is lower than a predefined threshold, then identifying that the captured photographic image (502) is blurred.

**11.** The method of any one of claims 1 to 10, which is embodied as computer instructions which are stored in a computer readable medium and executable by one or more processors of the electronic device.

**12.** An electronic device, comprising:
one or more processors;
a user interface which includes a visual display (32) coupled to the one or more processors;
a camera module (204) coupled to the one or more processors, the camera module (204) being configured to produce photographic images via a camera lens (12) of the electronic device, the camera module (204) including a blur detector (216);
the one or more processors being operative to:
operate the electronic device in an image capture mode where a current view through the camera lens (12) is produced in the visual display (32);
detect, via the user interface, an input request for capturing a photographic image of the current view in the image capture mode; and
in response to detecting the input request for capturing the photographic image in the image capture mode:
cause the photographic image to be captured using the camera module (204);
cause the captured photographic image (502) to be produced in the visual display (32);
detect, in the blur detector (216), when a blur characteristic in the captured photographic image (502) exceeds a predetermined threshold;
when the blur characteristic exceeds the predetermined threshold, cause a zoomed-in portion (504) of the captured photographic image to be produced in the visual display (32), simultaneously with the display of the captured photographic image (502), with use of a zoom factor to make the blur characteristic visually apparent in the zoomed-in portion (504); and
produce, in the visual display (32), an input prompt (508) for deleting the captured photographic image (502).

**13.** The electronic device of claim 12, wherein the one or more processors are further operative to:
when a timeout of a timer occurs before any selection of the input prompt (508) for deleting the captured photographic image (502), save the captured photographic image (502) in memory for permanent storage;
when a selection of the input prompt (508) for deleting the captured photographic image (502) is detected before the timeout of the timer occurs, delete the captured photographic image (502) from the memory; and
repeat the detecting of an input request for capturing a next photographic image in the image capture mode.

**14.** The electronic device of claim 13, wherein the one or more processors are further operative to:
produce, in the visual display (32), an input prompt (506) for saving the captured photographic image (502), the user input prompt (506) for saving the captured photographic image (502) comprising a visual object provided over the captured photographic image (502) in the visual display (32); and
when a timeout of a timer occurs before any manual selection of the user input prompts (506, 508) for saving or deleting the captured photographic image (502), save the captured photographic image (502) in memory for permanent storage.

**15.** The electronic device of any one of claims 10 to 15, wherein the one or more processors are further operative to:
cause the zoomed-in portion (504) of the captured photographic image to be produced by causing a picture-in-picture window or thumbnail comprising the zoomed-in portion (504) of the captured photographic image to be produced in the visual display (32); or
cause the zoomed-in portion (504) of the captured photographic image to be produced by causing a virtual magnifying glass window which includes the zoomed-in portion (504) of the captured photographic image to be produced in the visual display (32) and overlaid with the display of the captured photographic image (502).
